# EUROPEAN PATENT SPECIFICATION

(11) **EP 3 086 985 B1**
(45) Date of publication and mention of the grant of the patent: **11.04.2018**
(21) Application number: 14835592.8
(22) Date of filing: 22.12.2014
(51) Int. Cl.: B60R 21/02, B60P 3/42

(54) **A PARTITION WITH SLIDING MECHANISM**
TRENNWAND MIT SCHIEBEMECHANISMUS
CLOISON À MÉCANISME COULISSANT

(30) Priority: 26.12.2013 TR 201315331
(43) Date of publication of application: 02.11.2016
(73) Proprietor: Tofas Turk Otomobil Fabrikasi Anonim Sirketi, Bursa (TR)
(72) Inventor: KAYSERILI, Hakan, Bursa (TR)
(74) Representative: Dericioglu Kurt, Ekin
(86) International application number: PCT/TR2014/000522
(87) International publication number: WO 2015/099630

(56) References cited:
- EP-A2- 1 902 898
- DE-A1-102004 010 142
- FR-A1- 2 888 533
- FR-A1- 2 923 188
- FR-A1- 2 933 928
- JP-A- 2008 155 724
- US-A1- 2011 148 134

## Description

### Field of the Invention

The present invention relates to a partition with sliding mechanism used in commercial vehicles which can be opened as needed in order to increase cargo space by the client.

### Background of the Invention

In vehicles used for commercial purposes in current applications, there is a fixed left partition and a right partition between the cargo part and the front drive rand passenger seats in order to provide protection during accident. The fixed left partition behind the driver seat is fixed, while the right partition behind the passenger seat can be extended in order to increase cargo space in case it is required. There is a removable sheet metal panel on the right partition in order to increase cargo space. The sheet metal panel is attached to the partition with two metal hooks provided on the lower part and a plastic lock provided on the upper parts. The lock is opened by removing pressure on the sheet metal panel by turning the plastic lock. The sheet metal panel is lifted upwards by holding from the handle and removed from the metal hooks of the right partition. The sheet metal panel of the removed right partition is placed on the plastic holders on the fixed sheet metal panel of the left partition.

Replacing the sheet metal panel by carrying in order to increase the cargo space creates ergonomic problem in terms of carrying and it is not a solution which can be realized quickly. When the sheet metal panel is placed on the left partition, there is vibration/noise problem risk depending on the quaking of the vehicle. The requirement for removing the sheet metal panel for increasing cargo space causes to open cargo space only for one seat. The partition cannot be opened as much as the client requires.

European Patent Document no EP1902898, an application known in the state of the art, discloses a seat bulkhead assembly especially used in commercial vehicles, provided with a backrest which is movable between an essentially vertical raised position an essentially horizontal folded position

Japanese Patent Document no JP2008155724, an application known in the state of the art, discloses a rear seat which provides convenient use in loading space when it is tipped up. The seat can move back and forth and it can be folded.
French Patent Document no FR2923188, an application known in the state of the art, discloses a device having a support formed of a backrest (9) mounted in longitudinal translation relative to vehicle's enclosure. A partition separates the enclosure into front and rear compartments and it is connected to the roof. The partition is slidingly mounted to the support.

French Patent Document no FR2888533, an application known in the state of the art, discloses a partition which separates the cab interior from the loading space. A door is mounted slidingly along two upper left and right rails (20, 22) and two lower left and right rails to close an opening of the partition.

United States Patent Document no US2011148134, an application known in the state of the art, discloses a movable front bulkhead designed for van type vehicles. The front bulkhead is comprised of a number of panels that are connected to each other with hinges. The said panels are formed as required.

Document DE 10 2004 010 142 A1 discloses a partition according to the preamble of claim 1.

### Summary of the Invention

The objective of the present invention is to provide a partition with sliding mechanism which enables the space to be opened according to requirements by being slid instead of removing the sheet metal panel completely in order to increase the cargo space.

Another objective of the present invention is to provide a partition with sliding mechanism which presents quicker solution relative to the conventional applications since there is no need for mounting/demounting the sheet metal panel.

A further objective of the present invention is to provide a partition with sliding mechanism which prevents vibration and noise generation originating from vibration through the sheet metal panel kept at a certain distance by means of the guides.

According to the invention a partition having the features of claim 1 is provided.

### Detailed Description of the Invention

The "partition with sliding mechanism" developed to fulfill the objectives of the present invention is illustrated in the accompanying figure, in which,

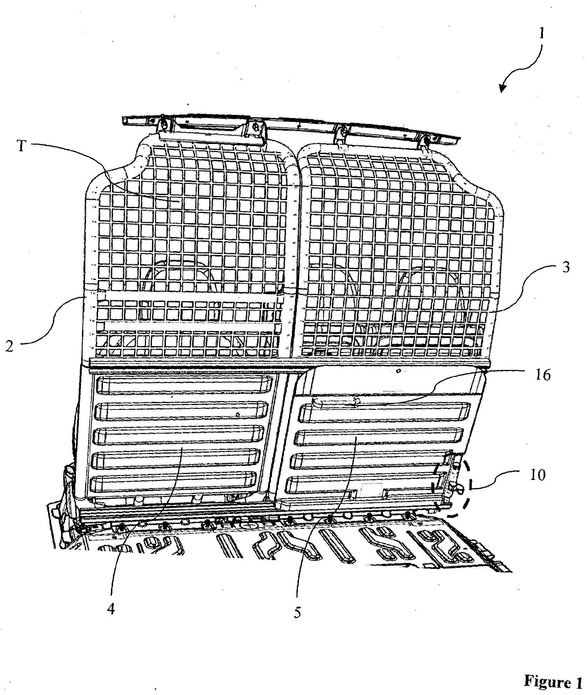

Figure 1 is the perspective view of the inventive partition with sliding mechanism.

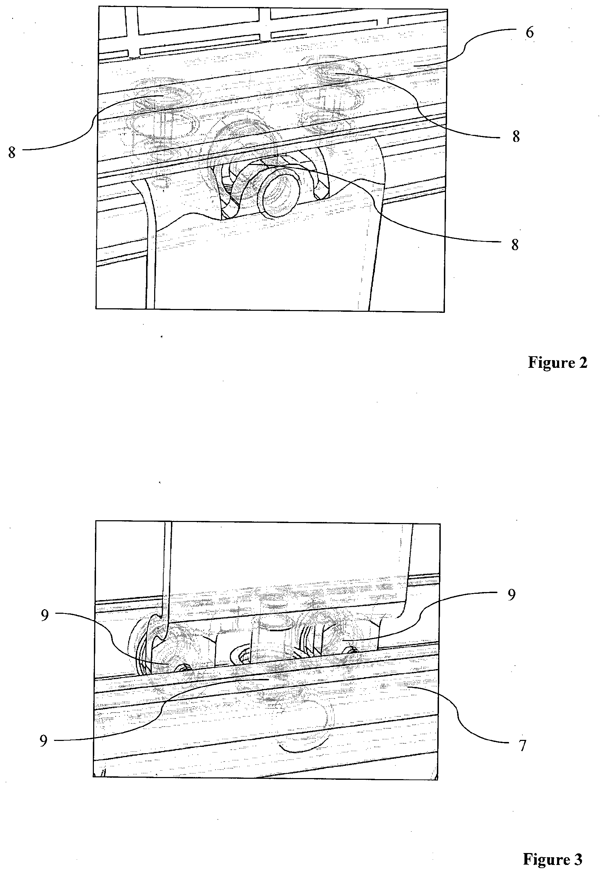

Figure 2 is the view of the upper guide structure and the upper rollers.
Figure 3 is the view of the lower guide structure and the lower rollers.

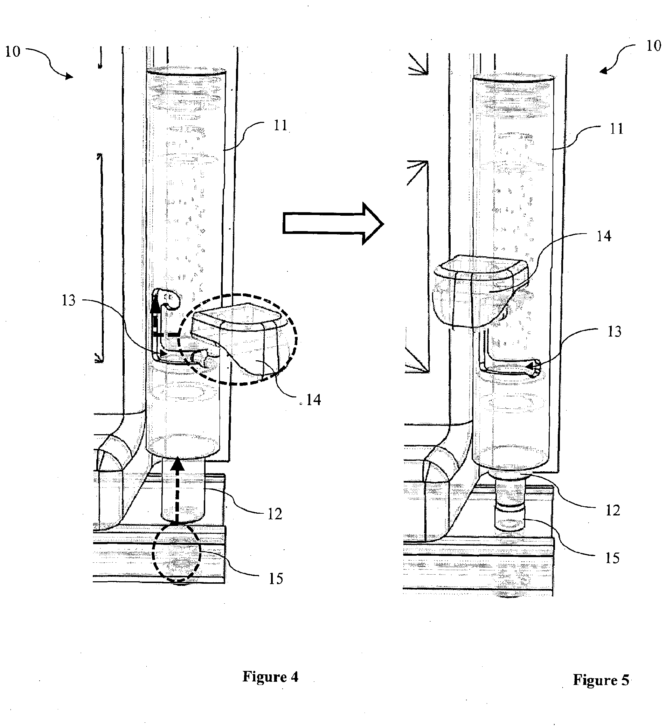

Figure 4 is the view of the locking state of the lock.
Figure 5 is the view of the opening state of the lock.

The components given in the figures are assigned reference numbers as follows:
1. Partition with sliding mechanism
2. Left partition
3. Fixed sheet metal panel
4. Right partition
5. Moving sheet metal panel
6. Upper guide
7. Lower guide
8. Upper roller
9. Lower roller
10. Lock
11. Slot
12. Shaft
13. Opening
14. Extension
15. Hole
16. Handle

### T. Wire net

The inventive partition with sliding mechanism (1), which allows using the place where the front passenger seats are located thus increasing the cargo space of the vehicle in commercial vehicles, comprises
- a left partition (2) which is provided behind the driver seat and has a wire net (T) on its upper part allowing to see the cargo space in the back, and a fixed sheet metal panel (3) on its lower part preventing the materials in the cargo space from passing towards the driver seat,
- a right partition (4) which is provided behind the front passenger seats and has a wire net (T) on its upper part allowing to see the cargo space in the back, and a moving sheet metal panel (5) on its lower part preventing the materials in the cargo space from passing towards the driver seat,
- at least one upper guide (6) which is attached to the partitions (2, 4) such that it will extend along the edges of the fixed sheet metal panel (3) and the moving sheet metal panel (5) corresponding to the wire nets (T), and has a C form cross section such that its open surface will face the cargo space,
- at least one lower guide (7) which is attached to the partitions (2, 4) such that it will extend along the edges of the fixed sheet metal panel (3) and the moving sheet metal panel (5) corresponding to the vehicle floor, and has a C form cross section such that its open surface will face the cargo space,
- at least one upper roller (8) which extends inside the moving metal sheet panel (5) from the upper guide (6) through its open part and enables the moving sheet metal panel (5) to hold onto upper guide (6) and to be slid right and left according to the vehicle axis inside the upper guide (6),
- at least one lower roller (9) which extends inside the moving metal sheet panel (5) from the lower guide (7) through its open part and enables the moving sheet metal panel (5) to hold onto lower guide (7) and to be slid right and left according to the vehicle axis inside the lower guide (7),
- at least one lock (10) which is positioned on the moving sheet metal panel (5) such that it will be close to at least one of the guides (6, 7), which has a slot (11) having a channel in the horizontal axis, at least one shaft (12) moving up/down inside the slot (11), an opening (13) located on the side surface of the slot (11), and at least one extension (14) coupled vertically to the shaft (12), going out of the slot (11) over the opening (13) and allowing the user moving the shaft (12),
- at least one hole (15) which is located on the guide (6, 7) to which the lock (10) is close and has the width wherein the shaft (12) inside the lock (10) can enter, and enables the moving sheet metal panel (5) to be fixed when the shaft (12) enters therein and to limit the sliding movement.

In the preferred embodiment of the invention, the moving sheet metal panel (5) has at least one handle (16) extending outwards from the surface facing the cargo space and allowing the user easily pulling/pushing by grabbing during sliding over the guides (6, 7).

In another embodiment of the invention, the moving sheet metal panel (5) has a movement mechanism which is controlled with a key located on a place where the user can easily reach such as above the steering wheel in order to make sliding movement over the guides (6, 7) and enables the movement to be realized with electrical drive.

In the preferred embodiment of the invention, the lower guide (7) has at least three holes (15) in order to keep the moving sheet metal panel (5) in closed, open and ajar positions so that an area in a required size can be created for cargo space.

In the preferred embodiment of the invention, the slot (11) has at least one protrusion which enables the extension (14) moving inside the opening (13) to be kept at certain positions and thus the shaft (12) to be kept at certain distances, and prevents the shaft (12) from moving with an effect such as gravity.

The inventive partition with sliding mechanism (1) separates the cargo space and the cabin part where the driver and passenger seats are located in vehicles with commercial purpose and prevents the cargo to be scattered towards the cabin during accident. The invention is comprised of two parts, namely left partition (2) and right partition (4). The left partition (2) functions as protector between the driver seat and the cargo space, and the right partition (3) functions as protector between the passenger seats and the cargo space. The partitions (2, 4) has each wire net so that the users can see the cargo space inside the cabin, and metal sheet panels (3, 5) for preventing the cargo moving towards the front during accident from scattering towards the front seats. In the state of the art, the right sheet metal panel corresponding behind the passenger seat is removed from the partition and mounted on the left sheet metal panel located behind the driver seat in order to increase the cargo space. On the other hand, in the partition with sliding mechanism (1), the moving sheet metal panel (5) behind the passenger seat slides between the upper guide (6) and the lower guide (7) mounted on the partitions (2, 4), and it is moved on the fixed sheet metal panel (3) located behind the driver seat. Therefore, extra area is created for the cargo space. Cargo space is increased even more by tilting the passenger seats during this process. The moving sheet metal panel (5) the position of which is changed by being slid has a shaft (12) located on the moving sheet metal panel (5) and enabling locking by inserting into the holes (15) positioned preferably on the lower guide (7) for keeping in a certain position. The shaft (12) is moved inside a slot (11) on the moving sheet metal panel (5) and enters into the hole (15) on the lower guide (7). After sliding the moving sheet metal panel (5) with the handle (16), preferably 3 different options are created in order to form openings in different sizes according to the need of the client. There are holes (15) enabling locking on the lower guide (7) for each option.

By means of the inventive partition with sliding mechanism (1), there is no need for carrying the sheet.metal panel in order to increase the cargo space. Since the moving sheet metal panel (5) is driven with the sliding mechanism, there is no risk for ergonomic problem and a quicker solution is presented relative to the conventional applications. Since the sliding sheet metal panel assembly is fixed on the guide, there is no risk for vibration/noise problems. The sheet metal panel can be opened as much as the client requires in order to increase the cargo space. By this means the passenger can be protected when the other seat is used for long cargo while the passenger is sitting in one of the seats.

## Claims

1. A partition which allows using the place where the front passenger seats are located by increasing the cargo space in commercial vehicles, **comprising**
- a left partition (2) which can be provided behind the driver seat and has a wire net (T) on its upper part allowing to see the cargo space in the back, and a fixed sheet panel (3) on its lower part preventing the materials in the cargo space from passing towards the driver seat,
- a right partition (4) which can be provided behind the front passenger seats and has a wire net (T) on its upper part allowing to see the cargo space in the back, and a further sheet panel (5) on its lower part preventing the materials in the cargo space from passing towards the driver seat, and **characterized in that**
- the partition has a sliding mechanism (1),
- the fixed sheet panel (3) of the left partition (2) is a fixed sheet metal panel (3),
- the further sheet panel (5) of the right partition (4) is a moving sheet metal panel (5),
- at least one upper guide (6) is attached to the partitions (2, 4) such that it will extend along the edges of the fixed sheet metal panel (3) and the moving sheet metal panel (5) corresponding to the wire nets (T), and has a C form cross section such that its open surface will face the cargo space in the mounted state of the partition,
- at least one lower guide (7) is attached to the partitions (2, 4) such that it will extend along the edges of the fixed sheet metal panel (3) and the moving sheet metal panel (5) corresponding to the vehicle floor, and has a C form cross section such that its open surface will face the cargo space in the mounted state of the partition,
- at least one upper roller (8) extends inside the moving metal sheet panel (5) from the upper guide (6) through its open part and enables the moving sheet metal panel (5) to hold onto upper guide (6) and to be slid right and left according to the vehicle axis inside the upper guide (6), in the mounted state of the partition,
- at least one lower roller (9) extends inside the moving metal sheet panel (5) from the lower guide (7) through its open part and enables the moving sheet metal panel (5) to hold onto lower guide (7) and to be slid right and left according to the vehicle axis inside the lower guide (7), in the mounted state of the partition,
- at least one lock (10) is positioned on the moving sheet metal panel (5) such that it will be close to at least one of the guides (6, 7), which has a slot (11) having a channel in the horizontal axis, at least one shaft (12) moving up/down inside the slot (11), an opening (13) located on the side surface of the slot (11), and at least one extension (14) coupled vertically to the shaft (12), going out of the slot (11) over the opening (13) and allowing the user moving the shaft (12),
- at least one hole (15) is located on the guide (6, 7) to which the lock (10) is close and has the width wherein the shaft (12) inside the lock (10) can enter, and enables the moving sheet metal panel (5) to be fixed when the shaft (12) enters therein and to limit the sliding movement.

2. A partition with sliding mechanism (1) according to claim 1, **characterized by** moving sheet metal panel (5) which has at least one handle (16) extending outwards from the surface facing the cargo space in the mounted state of the partition, and allowing the user easily pulling/pushing by grabbing during sliding over the guides (6, 7).

3. A partition with sliding mechanism (1) according to claim 1, **characterized by** moving sheet metal panel (5) which has a movement mechanism that is controlled with a key located on a place where the user can easily reach such as above the steering wheel in order to make sliding movement over the guides (6, 7) and enables the movement to be realized with electrical drive.

4. A partition with sliding mechanism (1) according to any one of the preceding claims, **characterized by** lower guide (7) which has at least three holes (15) in order to keep the moving sheet metal panel (5) in closed, open and ajar positions so that an area in a required size by the user can be created for cargo space.

5. A partition with sliding mechanism (1) according to any one of the preceding claims, **characterized by** slot (11) which has at least one protrusion which enables the extension (14) moving inside the opening (13) to be kept at certain positions and thus the shaft (12) to be kept at certain distances, and prevents the shaft (12) from moving with an effect such as gravity.

## Patentansprüche

1. Eine Trennwand, die es ermöglicht, den Platz, wo die vorderen Fahrgastsitze angeordnet sind, durch Vergrößerung des Laderaums in Nutzfahrzeugen zu nutzen, **umfassend**
- eine linke Trennwand (2), die hinter dem Fahrersitz vorgesehen sein kann und ein Drahtnetz (T) auf ihrem oberen Teil aufweist, um den Laderaum im Rücken zu sehen,
und eine feste Blechplatte (3) an ihrem unteren Teil, die es verhindert, dass die Materialien im Laderaum zum Fahrersitz gelangen,
- eine rechte Trennwand (4), die hinter dem vorderen Fahrgastsitzen vorgesehen sein kann und ein Drahtnetz (T) auf ihrem oberen Teil aufweist, um den Laderaum im Rücken zu sehen, und eine weitere Blechplatte (5) an ihrem unteren Teil, die es verhindert, dass die Materialien im Laderaum zum Fahrersitz gelangen,
**dadurch gekennzeichnet, dass**
- die Trennwand einen Gleitmechanismus (1) aufweist,
- die feste Blechplatte (3) der linken Trennwand (2) eine feste Blechplatte (3) ist,
- die weitere Blechplatte (5) der rechten Trennwand (4) eine bewegliche Blechplatte (5) ist,
- mindestens eine obere Führung (6), die so an Trennwänden (2,4) befestigt ist, dass sie sich entlang der Kanten der festen Blechplatte (3) und der beweglichen Blechplatte (5) entsprechend den Drahtnetzen (T) erstreckt, und einen C-förmigen Querschnitt aufweist, sodass dessen offene Fläche im montierten Zustand der Trennwand den Laderaum zugewandt ist,
- mindestens eine untere Führung (7), die an den Trennwänden (2,4) angebracht ist, sodass sie entlang der Kanten der festen Blechplatte (3) und der beweglichen Blechplatte (5) entsprechend dem Fahrzeugboden, und einen C-förmigen Querschnitt aufweist, sodass dessen offene Fläche im montierten Zustand der Trennwand den Laderaum zugewandt ist,
- mindestens eine obere Rolle (8), die innerhalb der beweglichen Blechplatte (5) von der oberen Führung (6) durch deren offenen Teil sich erstreckt und die bewegliche Blechplatte (5) Haltung an der oberen Führung (6) und Gleiten nach rechts und links, nach der Fahrzeugachse innerhalb der oberen Führung (6), im montierten Zustand der Trennwand ermöglicht,
- mindestens eine untere Rolle (9) die innerhalb der beweglichen Blechplatte (5) von der unteren Führung (7) durch deren offenen Teil sich erstreckt und die bewegliche Blechplatte (5) Haltung an der unteren Führung (7) und Gleiten nach rechts und links, nach der Fahrzeugachse innerhalb der unteren Führung (7), im montierten Zustand der Trennwand ermöglicht,
- mindestens eine Sperre (10), die auf der beweglichen Blechplatte (5) so positioniert ist, dass sie mindestens einer der Führungen (6,7) naheliegt, die einen Steckplatz (11) mit einem Kanal in der horizontalen Achse aufweist, mindestens eine Welle (12), die sich innerhalb des Steckplatzes (11) nach unten/ oben bewegt, eine Öffnung (13), die an der Seitenfläche des Steckplatzes (11) positioniert ist, und mindestens eine Erstreckung (14), die vertikal mit der Welle (12), herausragend aus dem Steckplatz (11) über die Öffnung (13) gekoppelt wird und dem Benutzer erlaubt, die Welle (12) zu bewegen.
- mindestens ein Loch (15), das an der Führung (6,7), zu der die Sperre (10) nahe steht, angeordnet ist und eine Breite, wobei die Welle (12) im Inneren der Sperre (10) eintreten kann, und der bewegliche Blechplatte (5) es ermöglicht, befestigt zu werden, wenn die Welle (12) darin eintritt und die Gleitbewegung zu begrenzen.

2. Eine Trennwand mit Gleitmechanismus (1) nach Anspruch 1, **gekennzeichnet durch** die bewegliche Blechplatte (5), die mindestens einen Griff (16) aufweist, der sich von der dem Laderaum zugewandten Fläche im montierten Zustand nach außen erstreckt und dem Benutzer ein einfaches Drücken/ Ziehen durch Ergreifen beim Gleiten über den Führungen (6,7) ermöglichen.

3. Eine Trennwand mit Gleitmechanismus (1) nach Anspruch 1, **gekennzeichnet durch** die bewegliche Blechplatte (5), die einen Bewegungsmechanismus aufweist, der mit einem Schlüssel gesteuert wird, der an einer Stelle, wie über dem Lenkrad, angeordnet ist, an die der Benutzer leicht erreichen kann, um die Gleitbewegung über die Führungen (6,7) zu ermöglichen und die Bewegung mit einem elektrischen Antrieb zu realisieren.

4. Eine Trennwand mit Gleitmechanismus (1) nach einem der vorangehenden Ansprüche, **gekennzeichnet durch,** eine untere Führung (7), die mindestens drei Löcher (15) aufweist, um die bewegliche Blechplatte (5) in der geschlossenen, geöffneten und angelehnten Positionen zu halten, sodass ein Bereich in der erforderlichen Größe durch den Benutzer für den Laderaum geschaffen werden kann.

5. Eine Trennwand mit Gleitmechanismus (1) nach einem der vorangehenden Ansprüche, **gekennzeichnet durch,** einen Steckplatz (11), der mindestens einen Vorsprung aufweist, der es ermöglicht, die sich Innerhalb der Öffnung (13) bewegende Erstreckung (14), in bestimmten Positionen zu halten und somit die Welle (12) in bestimmten Abständen gehalten wird und die Bewegung der Welle (12) durch einen Effekt wie Schwerkraft verhindert wird.

## Revendications

1. Une cloison qui permet d'utiliser l'endroit où sont situés les sièges passagers avant en augmentant l'espace de chargement dans les véhicules commerciaux, **comprenant**
- une cloison gauche (2) pouvant être fournie derrière le siège du conducteur et a un treillis (T) sur sa partie supérieure permettant de voir l'espace de chargement à l'arrière, et un panneau en feuille fixe (3) sur sa partie inférieure empêchant les matériaux dans l'espace de chargement de passer vers le siège du conducteur,
- une cloison droite (4) pouvant être fournie derrière les sièges passagers avant et a un treillis (T) sur sa partie supérieure permettant de voir l'espace de chargement à l'arrière, et un panneau de feuille fixe supplémentaire (5) sur sa partie inférieure empêchant les matériaux dans l'espace de chargement de passer vers le siège du conducteur,
**caractérisé en ce que**
- la cloison a un mécanisme coulissant (1),
- le panneau en feuille fixe (3) de la cloison de gauche (2) est un panneau en feuille fixe (3),
- le panneau en feuille fixe supplémentaire (5) de la cloison de gauche (4) est un panneau en feuille fixe,
- au moins un guide supérieur (6) est fixé aux cloisons (2, 4) tel qu'il s'étendra le long des bords du panneau en feuille fixe (3) et le panneau en feuille mobil (5) correspondant aux treillis (T), et a une section transversale de forme C telle que sa surface ouverte fera face à l'espace de chargement dans l'état monté de la cloison,
- au moins un guide inférieur (7) est fixé aux cloisons (2, 4) tel qu'il s'étendra le long des bords du panneau en feuille fixe (3) et le panneau en feuille mobil (5) correspondant au plancher du véhicule, et a une section transversale de forme C telle que sa surface ouverte fera face à l'espace de chargement dans l'état monté de la cloison,
- au moins un rouleau supérieur (8) s'étend à l'intérieur de la feuille mobile panneau (5) du guide supérieur (6) à travers sa partie ouverte et permet le déplacer le panneau en feuille (5) pour le maintenir sur le guide supérieur (6) et le faire glisser droite et gauche selon l'axe du véhicule à l'intérieur du guide supérieur (6), à l'état monté de la cloison,
- au moins un rouleau inférieur (9) s'étend à l'intérieur de la feuille mobile panneau (5) du guide inférieur (7) à travers sa partie ouverte et permet le déplacer le panneau en feuille (5) pour le maintenir sur le guide inférieur (7) et le faire glisser droite et gauche selon l'axe du véhicule à l'intérieur du guide inférieur (7), à l'état monté de la cloison,
- au moins un verrou (10) est positionné sur le panneau en feuille mobile (5) de sorte qu'il sera proche d'au moins l'un des guides (6, 7), qui comporte une fente (11) ayant un canal dans l'axe horizontal, au moins un arbre (12) se déplaçant vers le haut / bas à l'intérieur de la fente (11), une ouverture (13) située sur la surface latérale de la fente (11), et au moins une extension (14) couplée verticalement à l'arbre (12), sortant de la fente (11) par-dessus l'ouverture (13) et permettant à l'utilisateur de déplacer l'arbre (12),
- au moins un trou (15) est situé sur le guide (6, 7) auquel le verrou (10) est fermé et a la largeur dans laquelle peut pénétrer l'arbre (12) à l'intérieur du verrou (10), et permet de fixer le panneau en feuille mobile (5) lorsque l'arbre (12) y pénètre et de limiter mouvement coulissant.

2. Cloison avec mécanisme coulissant (1) selon la revendication 1, **caractérisé par** un panneau en feuille mobile (5) qui comporte au moins une poignée (16) s'étendant vers l'extérieur de la surface faisant face à l'espace de chargement de la cloison, et permettant à l'utilisateur de facilement tirer / pousser en saisissant pendant le coulissement au-dessus des guides (6, 7).

3. Cloison à mécanisme coulissant (1) selon la revendication 1, **caractérisée par** panneau en feuille mobile (5) doté d'un mécanisme de déplacement commandé par une touche située à un endroit où l'utilisateur peut facilement atteindre, par exemple au-dessus du volant, pour faire coulisser les guides (6, 7) et permettre le mouvement à réaliser avec entraînement électrique.

4. Cloison à mécanisme coulissant (1) selon l'une quelconque des revendications précédentes, **caractérisée par** un guidage inférieur (7) qui comporte au moins trois trous (15) pour maintenir le panneau en feuille mobile (5) des positions fermé, ouvert et entrouvertes de sorte qu'une zone d'une taille requise par l'utilisateur peut être créée pour l'espace de chargement.

5. Cloison à mécanisme coulissant (1) selon l'une quelconque des revendications précédentes, **caractérisée par** une fente (11) qui comporte au moins une protubérance qui permet de maintenir l'extension (14) se déplaçant à l'intérieur de l'ouverture (13) à certaines positions et ainsi l'arbre (12) doit être maintenu à certaines distances, et empêche l'arbre (12) de se déplacer avec un effet tel que la gravité.
